# EUROPEAN PATENT SPECIFICATION

(11) **EP 2 425 113 B1**
(45) Date of publication and mention of the grant of the patent: **20.02.2013**
(21) Application number: 10714251.5
(22) Date of filing: 14.04.2010
(51) Int. Cl.: F02M 35/024, F02M 35/16

(54) **AN AIR FILTER GROUP FOR MOTOR VEHICLES AND A FILTER ELEMENT**
EINE LUFTFILTERGRUPPE FÜR KRAFRFAHRZEUGE UND FILTERLELEMENT
GROUPE FILTRE À AIR POUR VÉHICULES À MOTEUR ET ÉLÉMENT DE FILTRE

(30) Priority: 27.04.2009 IT RE20090041
(43) Date of publication of application: 07.03.2012
(73) Proprietor: Ufi Filters s.p.a., 46047 Porto Mantovano (Mantova) (IT)
(72) Inventor: GIRONDI, Giorgio, I-46100 Mantova (IT)
(74) Representative: Corradini, Corrado
(86) International application number: PCT/EP2010/054898
(87) International publication number: WO 2010/124934

(56) References cited:
- EP-A- 1 745 968
- DE-A1- 19 709 309
- DE-A1- 19 941 303
- DE-A1-102004 002 293
- DE-B1- 1 526 667
- US-A- 5 871 567

## Description

The invention relates to an air filter group for motor vehicles. The invention also concerns a filter element to be used internally of an air filter group.

As is known, at present, in motor vehicle engine compartments, a casing or similar containing body is used for containing some of the components provided in the engine compartment, such as for example the air filter box, such as to protect these elements and lend a certain aesthetic appeal to the compartment itself.

In general, in order to attain an aesthetic function, the in-view surface of the casing will preferably not display dents, scratches or other surface defects due to moulding or manipulation; for this reason there must not be too-deep ribbings, nor should there be welding seams in view or other visually-disturbing elements

Known filter elements such as shown in DE 19941303A1 must be fixed to the lower part, not in view, of the casing surface, and the fastening of the elements can therefore give rise to aesthetically unattractive results on the external surface of the casing.

Also, some known filter elements have a star configuration and are inserted in a cartridge having a circular or elliptic section; these elements necessarily are large; this fact leads to problems in providing that the volume occupied by the casing responds to ever-more stringent requirements of layout and volumes.

An aim of the present invention is to realise a filter group which can be integrated optimally internally of the engine compartment of a motor vehicle, reducing volumes and sizes as much as possible.

A further aim of the invention is to realise a filter group which avoids negatively influencing the aesthetic effect of the engine compartment.

These aims are attained by the present invention which has as object an air filter group for motor vehicles, comprising a box body, provided with at least an air inlet opening and an air outlet opening, and further comprising a filter element destined to be located internally of the box body, characterised in that the air outlet opening is conformed such as to receive the filter element from the outside of the box body, and in that the filter element exhibits a seal on an end side thereof, the seal being provided with a border destined to be at least partially rested on the edge of the opening and being such as to enable fastening the filter element to the box body and maintaining it in position by compression directly by the conveyor of the clean air outlet.

In a further realisation of the element, the air filter group for motor vehicles, comprises a tray provided with at least an air inlet opening and an air outlet opening, and further comprises a filter element destined to be located internally of the tray, and is characterised in that the tray is covered by a shaped surface having an aesthetic function and also being a protection.

The shaped surface is preferably smooth in an external part thereof.

The invention also concerns a filter element to be used with an air filter group for motor vehicles, characterised in that it, in working configuration, comprises a filter wall having a substantially parallelepiped conformation, the filter wall exhibiting at least a sheet of folded paper, in which the sheet is folded on itself in a first and second layer thereof, which layers are opposite one another, and in which each of the layers exhibits an undulated configuration constituted by a plurality of folds.

Working configuration means the configuration assumed by the filter element when it is actually used with the air filter group, in order to filter the air. Further characteristics of the invention are delineated in the dependent claims.

Further characteristics and advantages of the invention will emerge from a reading of the following description, provided by way of non-limiting example with the help of the accompanying figures of the drawings, in which:
figure 1 is an axonometric view of the filter group of the invention;
figures 2 and 3 are respectively a view from above and a view from below of the filter group of figure 1;
figures 4 and 5 are respectively a front view and a side view of the filter group;
figure 6 is a section view of the filter group along plane VI-VI of figure 4;
figure 7 is an axonometric view of a filter element especially designed for the filter group of the invention;
figure 8 is a view from above of the filter group of figure 7;
figure 9 is a front view of the filter element of figures 7-8;
figure 10 is a section view of the filter element along plane X-X of figure 8;
figure 11 is a first detail in section of the filter element of figures 7-10;
figure 12 is a second detail in section of the filter element of figures 7-10; and
figure 13 is a lateral view of the filter element, with an indication of the air flows crossing it.

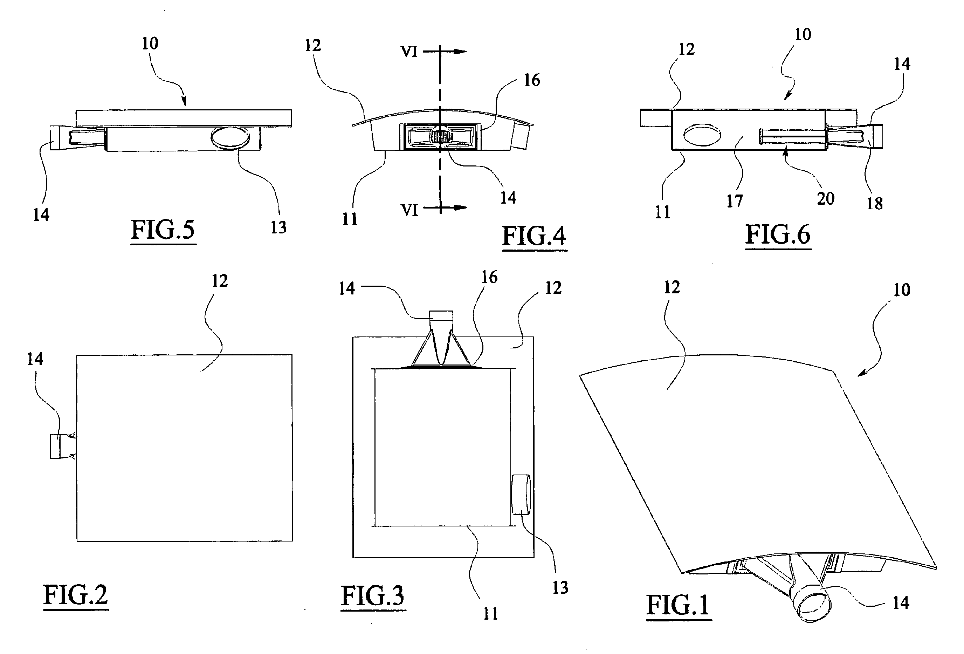

Firstly, figures 1-6 detail a filter group of the present invention, denoted in its entirety by reference number 10. The filter group is made up of a closed box body 11 composed by a housing tray for covering and containing the filter element, the tray being closed by a shaped surface 12 which is an aesthetic protection.

The lateral walls of the housing tray define the lateral walls of the filter box 11, which is therefore not very developed in height.

The shaped surface 12 is preferably smooth externally.

As can be seen in figure 3, the box body 11 is provided with an inlet 13 for dirty air and an outlet 14 for clean air that has been filtered by the filter element.

During mounting, the filter element can be inserted from outside and on an end side exhibits a seal 16 which is held in direct compression by the conveyor of the outlet 14 of the clean air 18.

The outlet 14 is located on a lateral wall of the housing tray, so that also the seal zone is located on said lateral wall.

Also the inlet 13 is either located on a lateral wall of the housing tray.

In more detail, the seal 16 is provided with an edge destined to be rested at least partially on the border of the opening defining the clean air outlet, and is such as to enable fastening the filter element to the box body, as it is held in position by compression, directly by the conveyor of the clean air outlet.

As can be seen in figure 6, the special construction of the filter group of the invention avoids the need for a seal between the aesthetic cover and the filter, as the interface zone is on the dirty air side 17. In this way there is no need to introduce welding seams and reinforcing ribs on the shaped surface 12.

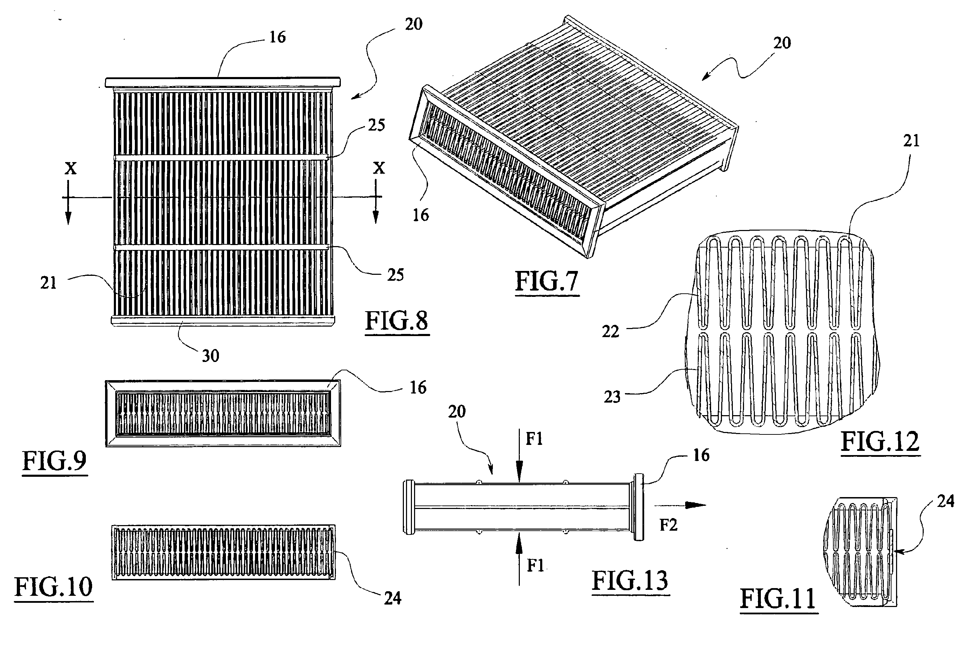

As regards the filter element itself, illustrated in figures 7-13 and denoted by reference number 20, the filter element generally has one only sheet of folded paper 21, in which the sheet is folded such as to assume a conformation exhibiting a first and a second layer 22, 23 which are opposite one another and in which each of the layers exhibits an undulated configuration constituted by a plurality of folds.

Further, as illustrated in figure 11, in the configuration of the single layer of folded paper 21 the folded paper 21 itself is closed at an end side by a base 24 which can be glued or provided with adhesive or another joining means with the layer of folded paper 21.

The filter element is thus constituted by a volume closed by the two layers of undulated or pleated paper, closed at ends thereof; the filtered air zone is closed by these two layers.

In substance the filter direction is from the outside towards the inside, and the filtered air exits from the side, as illustrated for example in figure 13, in which the arrows F1 indicate the flow of entering air, and the arrow F2 indicates the outlet flow. The filtered air zone is comprised between the two series of folds. It is also possible to superpose the folds, thus further reducing the height of the panel while providing the same filtering surface; in this case there will be a reduction in the air-crossing section.

In a variant of the invention, two sheets of folded paper are provided, located one above the other and subsequently folded in the described conformation.

Further, the layer of folded paper 21 is preferably reinforced above and below by transversal strips 25 which are joined, for example by heat-welding, to the crests of the layer of folded paper. The structural function is performed by hot-melt drops (at least two per side) arranged in a perpendicular direction with respect to the folds in the paper.

A rear side of the filter element is closed by a bottom 30 made of polyurethane, while the clean air outlet side has a polyurethane crown seal. The filter element thus exhibits a seal on the smaller sides thereof; thus the seal is limited to the smaller side of the element.

Given the simplicity of the solution, and the fact that the filter element is constituted by a wall fashioned by a single sheet of pleated paper, this type of panel filter element can be realised using the same apparatus as for standard panels or filter elements. Thanks to this type of filter element the shape of the filter body can be significantly changed, as the seal zone can also be located on the lateral walls and on the smaller sides of the filter box. A peculiarity of this solution consists in the fact that it can be easily produced using a production process and apparatus for the creation of standard air filter panels.

With respect to cylindrical cartridge filter elements with a head seal, as in the prior art, the present panel filter element enables access to the filter element from outside, as the filter element can be mounted and demounted without having to deassemble the body and the filter box lid. Only the clean air conveyor has to be removed.

A further advantage of the present panel filter element with respect to a head seal cartridge element consists in the possibility of having much smaller size in terms of height, while not reducing the filter surfaces.

This solution enables producing a filter box which is not very developed in height, in which the aesthetic protection and the rest of the filter box are in the dirty air zone: thus it is not necessary to provide seals or welds which guarantee the seal on the filter box-aesthetic cover interface zone.

Thus the upper surface of the casing can also be made with the desired aesthetic qualities.

The structural and layout advantages are evident: the aesthetic cover is made without welding and structurally-necessary details for keepting the seal or other element under compression.

Obviously modifications or improvements dictated by contingent or special motivations might be brought to the invention without its forsaking the ambit of the invention as claimed herein below.

## Claims

1. An air filter group (10) for motor vehicles, comprising a box body (11), provided with at least an air inlet opening and an air outlet opening, and further comprising a filter element (20) destined to be located internally of the box body (11), **characterised in that** the air outlet opening is conformed such that the filter element (20) can be located internally of the box body (11) by inserting the filter element (20) in the air outlet opening from the outside of the box body (11), and **in that** the filter element exhibits a seal (16) on an end side thereof, the seal (16) being provided with a border destined to be at least partially rested on an edge of the air outlet opening and being such as to enable fastening the filter element (20) to the box body and being maintained in position by compression directly by an outlet conveyor (14) of the clean air outlet (18).

2. The filter group (10) of claim 1, wherein the filter element (20) comprises a filter wall having a substantially parallelepiped conformation, the filter wall exhibiting at least a sheet of folded paper (21), in which the sheet is folded on itself into a first and a second layer (22, 23), opposite one another, and in which each of the layers exhibits an undulated configuration constituted by a plurality of folds.

3. The filter group (10) of claim 2, wherein the conformation of the sheet of folded paper (21) comprises the sheet of folded paper (21) being closed at an end side thereof by a base (24) which can be glued or provided with adhesive or a further joining means with the layer of folded paper (21).

4. The filter group (10) of claim 2, wherein the sheet of folded paper (21) is superiorly and inferiorly reinforced by transversal strips (25) joined to external crests of the two layers of undulated folded paper.

5. The filter group (10) of claim 4, wherein the transversal strips (25) are joined by heat-welding to the external crests of the two layers (22, 23) of paper.

6. The filter group (10) of claim 5, wherein a posterior side of the filter element is closed by a bottom (30), while a clean air outlet side exhibits a seal destined to interface with an air outlet opening in a filter group.

7. The filter group (10) of claim 1, wherein the box body (11) comprises a tray, provided with the at least an air inlet opening and the air outlet opening, the filter element (20) being destined to be internally located in the tray, the tray being covered by a shaped surface (12) having an aesthetic protection function.

8. The filter group (10) of claim 7, wherein the shaped surface (12) is smooth in an external part thereof.

9. The filter group (10) of claim 7, wherein the shaped surface (12) having an aesthetic protection function is fixed to the box body by means of welding or gluing.

10. The filter group (10) of claim 7, wherein the filter element exhibits a substantially parallelepiped conformation.

11. The filter group (10) of claim 7, wherein said at least an air outlet opening is located on a lateral wall of the tray.

12. The filter goup (10) of claim 1, wherein the seal (16) of the filter element (20) is rested on the outside of the box body (11).

13. A filter element (20) to be used with an air filtering group for motor vehicles according to one or more of the preceding claims 1-12, that, in working configuration, comprises a filter wall having a substantially parallelepiped conformation, **characterised in that** the filter wall comprising at least a sheet of pleated paper (21) folded on itself in a first layer and a second layer (22, 23), superposed one another, in which each of the layers exhibits a pleated configuration constituted by a plurality of folds.

14. The filter element (20) of claim 13, wherein the conformation of the folded sheet (21) is such that it is closed at an end side thereof by a base (24) which can be glued or provided with adhesive or another joining means with the layer of folded paper (21).

15. The filter element (20) of claim 13, wherein the sheet of folded paper (21) is superiorly and inferiorly reinforced by transversal strips (25) joined to the external crests of the two layers of undulated folded paper.

16. The filter element (20) of claim 15, wherein the transversal strips (25) are joined by heat-welding to the external crests of two layers (22, 23) of paper.

17. The filter element (20) of claim 13, wherein a posterior side of the filter element is closed by a bottom (30), while the clean air outlet side exhibits a seal destined to interface with an air outlet opening in a filter group such as to realise there-with a seal by compression directly by the outlet conveyor (14) of the clean air outlet (18).

## Patentansprüche

1. Luftfiltergruppe (10) für Kraftfahrzeuge, umfassend einen Kastenkörper (11), der mit mindestens einer Lufteinlassöffnung und einer Luftauslassöffnung versehen ist, und ferner ein Filterelement (20) umfassend, das zur Anordnung im Inneren des Kastenkörpers (11) bestimmt ist, **dadurch gekennzeichnet, dass** die Luftauslassöffnung so angepasst ist, dass das Filterelement (20) im Inneren des Kastenkörpers (11) angeordnet werden kann, indem das Filterelement (20) von der Außenseite des Kastenkörpers (11) in die Luftauslassöffnung eingesetzt wird, und dadurch, dass das Filterelement eine Dichtung (16) an einer ihrer Endseiten aufweist, wobei die Dichtung (16) mit einer Begrenzung versehen ist, die dafür bestimmt ist, mindestens teilweise an einem Rand der Luftauslassöffnung aufzuliegen, und die so gestaltet ist, dass sie die Befestigung des Filterelements (20) am Kastenkörper ermöglicht, und die durch direkte Kompression durch einen Auslassförderer (14) des Reinluftauslasses (18) in Position gehalten wird.

2. Filtergruppe (10) nach Anspruch 1, wobei das Filterelement (20) eine Filterwand mit einem im Wesentlichen parallelepipeden Aufbau umfasst, wobei die Filterwand mindestens eine Bahn gefalteten Papiers (21) aufweist, wobei die Bahn auf sich selbst zu einer ersten und einer zweiten Lage (22, 23) gefaltet ist, die einander gegenüber liegen, und wobei jede der Lagen eine gewellte Konfiguration aufweist, die aus mehreren Falten besteht.

3. Filtergruppe (10) nach Anspruch 2, wobei der Aufbau der Bahn gefalteten Papiers (21) umfasst, dass die Bahn gefalteten Papiers (21) an einer ihrer Endseiten durch eine Basis (24) verschlossen ist, die mit der Lage gefalteten Papiers (21) verleimt oder mit Haftmittel oder einem anderen Verbindungsmittel versehen ist.

4. Filtergruppe(10) nach Anspruch 2, wobei die Bahn gefalteten Papiers (21) auf der Oberseite und der Unterseite mit Querstreifen (25) verstärkt ist, die mit den äußeren Kämmen der beiden Lagen gewellten, gefalteten Papiers verbunden sind.

5. Filtergruppe (10) nach Anspruch 4, wobei die Querstreifen (25) durch Heißschweißung mit den äußeren Kämmen der beiden Lagen (22, 23) Papier verbunden sind.

6. Filtergruppe (10) nach Anspruch 5, wobei die hintere Seite des Filterelements durch einen Boden (30) verschlossen ist, während eine Reinluftauslassseite eine Dichtung aufweist, die dafür bestimmt ist, eine Verbindung mit einer Luftauslassöffnung in einer Filtergruppe herzustellen.

7. Filtergruppe (10) nach Anspruch 1, wobei der Kastenkörper (11) eine Wanne umfasst, die mit mindestens einer Lufteinlassöffnung und der Luftauslassöffnung versehen ist, wobei das Filterelement (20) dafür bestimmt ist, im Inneren der Wanne angeordnet zu sein, wobei die Wanne durch eine Formoberfläche (12) mit einer ästhetischen Schutzfunktion abgedeckt ist.

8. Filtergruppe (10) nach Anspruch 7, wobei die Formoberfläche (12) an ihrem äußeren Teil glatt ist.

9. Filtergruppe (10) nach Anspruch 7, wobei die Formoberfläche (12), die eine ästhetische Schutzfunktion aufweist, mittels Schweißung oder Klebung an dem Kastenkörper befestigt ist.

10. Filtergruppe (10) nach Anspruch 7, wobei das Filterelement einen im Wesentlichen parallelepipeden Aufbau aufweist.

11. Filtergruppe (10) nach Anspruch 7, wobei die mindestens eine Luftauslassöffnung an einer Seitenwand der Wanne angeordnet ist.

12. Filtergruppe (10) nach Anspruch 1, wobei die Dichtung (16) des Filterelements (20) an der Außenseite des Kastenkörpers (11) anliegt.

13. Filterlement (20) zur Verwendung mit einer Luftfiltergruppe für Kraftfahrzeuge nach einem oder mehreren der Ansprüche 1 bis 12, das in funktionstüchtiger Konfiguration eine Filterwand mit einem im Wesentlichen parallelepipeden Aufbau aufweist, **dadurch gekennzeichnet, dass** die Filterwand mindestens eine Bahn plissierten Papiers (21) umfasst, die auf sich selbst zu einer ersten und einer zweiten Lage (22, 23) gefaltet ist, die übereinander liegen, wobei jede der Lagen eine plissierte Konfiguration aufweist, die aus mehreren Falten besteht.

14. Filterelement (20) nach Anspruch 13, wobei der Aufbau der gefalteten Bahn (21) derart ist, dass sie an einer ihrer Endseiten durch eine Basis (20) verschlossen ist, die mit der Lage gefalteten Papiers (21) verleimt oder mit Haftmittel oder einem anderen Verbindungsmittel versehen ist.

15. Filterelement (20) nach Anspruch 13, wobei die Bahn gefalteten Papiers (21) auf der Oberseite und der Unterseite mit Querstreifen (25) verstärkt ist, die mit den äußeren Kämmen der beiden Lagen gewellten, gefalteten Papiers verbunden sind.

16. Filterelement (20) nach Anspruch 15, wobei die Querstreifen (25) durch Heißschweißung mit den äußeren Kämmen der beiden Lagen (22, 23) Papier verbunden sind.

17. Filterelement (20) nach Anspruch 13, wobei eine hintere Seite des Filterelements durch einen Boden (30) verschlossen ist, während eine Reinluftauslassseite eine Dichtung aufweist, die dafür bestimmt ist, eine Verbindung mit einer Luftauslassöffnung in einer Filtergruppe herzustellen, sodass damit eine Dichtung durch direkte Kompression durch den Auslassförderer (14) des Reinluftauslasses (18) realisiert wird.

## Revendications

1. Groupe de filtre à air (10) pour véhicules à moteur, comprenant un corps de boîtier (11) pourvu d'au moins un orifice d'entrée d'air et un orifice de sortie d'air, et comprenant en outre un élément de filtre (20) destiné à être placé à l'intérieur du corps de boîtier (11), **caractérisé en ce que** l'orifice de sortie d'air est conformé de telle sorte que l'élément de filtre (20) peut être placé à l'intérieur du corps de boîtier (11) en insérant l'élément de filtre (20) dans l'orifice de sortie d'air à partir de l'extérieur du corps de boîtier (11), et **en ce que** l'élément de filtre comporte un joint d'étanchéité (16) à une de ses extrémités, le joint d'étanchéité (16) étant pourvu d'une bordure destinée à être posée au moins partiellement sur un bord de l'orifice de sortie d'air, de manière à permettre la fixation de l'élément de filtre (20) sur le corps de boîtier et en étant maintenu en place par compression directement par un convoyeur de sortie (14) de la sortie d'air propre (18).

2. Groupe de filtre (10) selon la revendication 1, dans lequel l'élément de filtre (20) comprend une paroi de filtre ayant une conformation essentiellement parallélépipédique, la paroi de filtre comportant au moins une feuille de papier plié (21), dans lequel la feuille est pliée sur elle-même pour former une première couche et une deuxième couche (22, 23) opposées, et dans lequel chacune des couches présente une configuration ondulée constituée d'une pluralité de plis.

3. Groupe de filtre (10) selon la revendication 2, dans lequel la conformation de la feuille de papier plié (21) comprend la feuille de papier plié (21) fermée à une de ses extrémités par une base (24) qui peut être collée ou pourvue d'un adhésif ou d'un autre moyen de jonction avec la couche de papier plié (21).

4. Groupe de filtre (10) selon la revendication 2, dans lequel la feuille de papier plié (21) est renforcée dans ses parties supérieure et inférieure par des bandes transversales (25) jointes à des crêtes externes des deux couches de papier plié ondulé.

5. Groupe de filtre (10) selon la revendication 4, dans lequel les bandes transversales (25) sont jointes par soudage à chaud aux crêtes externes des deux couches (22, 23) de papier.

6. Groupe de filtre (10) selon la revendication 5, dans lequel un côté postérieur de l'élément de filtre est fermé par un fond (30), alors qu'un côté de sortie d'air propre comporte un joint d'étanchéité destiné à faire office d'interface avec un orifice de sortie d'air dans un groupe de filtre.

7. Groupe de filtre (10) selon la revendication 1, dans lequel le corps de boîtier (11) comporte un plateau pourvu desdits au moins un orifice d'entrée d'air et un orifice de sortie d'air, l'élément de filtre (20) étant destiné à être placé à l'intérieur du plateau, le plateau étant recouvert par une surface conformée (12) ayant une fonction de protection esthétique.

8. Groupe de filtre (10) selon la revendication 7, dans lequel la surface conformée (12) est lisse sur une partie externe de celle-ci.

9. Groupe de filtre (10) selon la revendication 7, dans lequel la surface conformée (12) ayant une fonction de protection esthétique est fixée au corps de boîtier par soudage ou collage.

10. Groupe de filtre (10) selon la revendication 7, dans lequel l'élément de filtre présente une conformation essentiellement parallélépipédique.

11. Groupe de filtre (10) selon la revendication 7, dans lequel ledit au moins un orifice de sortie d'air orifice est situé sur une paroi latérale du plateau.

12. Groupe de filtre (10) selon la revendication 1, dans lequel le joint d'étanchéité (16) de l'élément de filtre (20) est posé sur l'extérieur du corps de boîtier (11).

13. Élément de filtre (20) destiné à être utilisé avec un groupe de filtration d'air pour véhicules à moteur selon une ou plusieurs des revendications précédentes 1 à 12, qui comprend, en configuration de service, une paroi de filtre ayant une conformation essentiellement parallélépipédique, **caractérisé en ce que** la paroi de filtre comprend au moins une feuille de papier plissé (21) pliée sur elle-même pour former une première couche et une deuxième couche (22, 23) superposées, dans lequel chacune des couches présente une configuration plissée constituée d'une pluralité de plis.

14. Élément de filtre (20) selon la revendication 13, dans lequel la conformation de la feuille pliée (21) est telle qu'elle est fermée à une de ses extrémités par une base (24) qui peut être collée ou pourvue d'un adhésif ou d'un autre moyen de jonction avec la couche de papier plié (21).

15. Élément de filtre (20) selon la revendication 13, dans lequel la feuille de papier plié (21) est renforcée dans ses parties supérieure et inférieure par des bandes transversales (25) jointes aux crêtes externes des deux couches de papier plié ondulé.

16. Élément de filtre (20) selon la revendication 15, dans lequel les bandes transversales (25) sont jointes par soudage à chaud aux crêtes externes de deux couches (22, 23) de papier.

17. Élément de filtre (20) selon la revendication 13, dans lequel un côté postérieur de l'élément de filtre est fermé par un fond (30), alors que le côté de sortie d'air propre comporte un joint d'étanchéité destiné à faire office d'interface avec un orifice de sortie d'air dans un groupe de filtre de manière à réaliser ainsi un joint d'étanchéité par compression directement par le convoyeur de sortie (14) de la sortie d'air propre (18).
